(19) Europäisches Patentamt
European Patent Office
Office européen des brevets

(11) **EP 4 459 403 A1**

(12) **EUROPEAN PATENT APPLICATION**
published in accordance with Art. 153(4) EPC

(43) Date of publication:
**06.11.2024 Bulletin 2024/45**

(21) Application number: **22915938.9**

(22) Date of filing: **23.12.2022**

(51) International Patent Classification (IPC):
***G05B 23/02*** *(2006.01)*

(52) Cooperative Patent Classification (CPC):
**G05B 23/02**

(86) International application number:
**PCT/JP2022/047561**

(87) International publication number:
**WO 2023/127715 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.12.2021 JP 2021215166**

(71) Applicants:
• **Hitachi Zosen Corporation**
  **Osaka-shi, Osaka 559-8559 (JP)**
• **National University Corporation Nara Institute of Science and Technology**
  **Ikoma-shi, Nara 630-0192 (JP)**

(72) Inventors:
• **ISE, Akifumi**
  **Osaka-shi, Osaka 559-8559 (JP)**
• **KAWABATA, Kaoru**
  **Osaka-shi, Osaka 559-8559 (JP)**
• **MATSUBARA, Takamitsu**
  **Ikoma-shi, Nara 630-0192 (JP)**
• **MICHAEL, Brendan William Bharrat**
  **Ikoma-shi, Nara 630-0192 (JP)**

(74) Representative: **Grünecker Patent- und Rechtsanwälte**
**PartG mbB**
**Leopoldstraße 4**
**80802 München (DE)**

(54) **INFORMATION PROCESSING DEVICE, ANALYSIS METHOD, CONTROL SYSTEM, AND ANALYSIS PROGRAM**

(57)    A dynamic model in which a change of an analysis target phenomenon in a temporal direction and a spatial direction is accurately reflected is generated with a relatively small operation amount. An information processing device (1) includes: a reconfiguration section (103) that generates reconfiguration data by reconfiguring time-series data (111) from part of frequency components of the time-series data obtained as a result of observation of an analysis target phenomenon in a plant; and an analysis section (104) that carries out spatio-temporal analysis on the reconfiguration data to generate a dynamic model (112).

FIG. 1

**Description**

Technical Field

The present invention relates to an information processing device and the like each of which models, with use of observation data in a plant, a phenomenon which is to be analyzed (analysis target phenomenon).

Background Art

In plant operation, it is one of the most important matters to accurately acknowledge a state of the plant and carry out appropriate control according to the state. Thus, heretofore, development of a technique for accurately acknowledging the state of the plant has been promoted. For example, Patent Literature 1 discloses a technique relating to a waste treatment plant including a stoker-type incinerator. Specifically, Patent Literature 1 indicated below discloses a technique for deriving, on the basis of imaging data captured by a stereo camera and a position where the stereo camera is disposed, a burn-off point, which is a boundary between a combustion zone and incineration ash.

Citation List

[Patent Literature]

[Patent Literature 1]
Japanese Patent Application Publication, Tokukai, No. 2018-155411

Summary of Invention

Technical Problem

It takes time between conduction of control for adjusting the position of the burn-off point and reflection of the control to the position of the burn-off point. Thus, it is desired to predict a future position of the burn-off point. The technique of Patent Literature 1, however, can merely derive a current position of the burn-off point, and cannot predict a near-future position of the burn-off point.
Here, as a technique for analyzing time-series observation data, spatio-temporal analysis has been known. Use of the spatio-temporal analysis makes it possible to generate, from time-series data obtained as a result of observation of a target phenomenon, a dynamic model indicative of a change of the phenomenon in a temporal direction and a spatial direction.
However, time-series data observed in a plant generally includes many noise components. Such noise components reduces precision of the dynamic model, and excessively increase an operation amount and operation time required to generate the dynamic model. For example, in a case where a moving image of a state of an inside of an incinerator is captured in a manner as disclosed in Patent Literature 1, the resulting moving image may include not only the burn-off point but also various things such as flickering flame and/or moving smoke. These things may cause reduction in the precision of the dynamic model and increase in the operation amount.
An aspect of the present invention is to provide an information processing device and the like each capable of generating, with a relatively small operation amount, a dynamic model in which a change of an analysis target phenomenon in a temporal direction and a spatial direction is accurately reflected.

Solution to Problem

In order to attain the above object, an information processing device in accordance with an aspect of the present invention includes: a reconfiguration section that generates reconfiguration data by reconfiguring time-series data from part of frequency components of the time-series data obtained as a result of observation of a phenomenon in a plant which phenomenon is to be analyzed; and an analysis section that carries out spatio-temporal analysis on the reconfiguration data to generate a dynamic model indicative of a change of the phenomenon in a temporal direction and a spatial direction.
In order to attain the above object, an analysis method in accordance with an aspect of the present invention is an analysis method that is executed by one or more information processing devices, the analysis method including: a reconfiguration step of generating reconfiguration data by reconfiguring time-series data from part of frequency components of the time-series data obtained as a result of observation of a phenomenon in a plant which phenomenon is to be analyzed; and an analysis step of carrying out spatio-temporal analysis on the reconfiguration data to generate a dynamic model indicative of a change of the phenomenon in a temporal direction and a spatial direction.

Advantageous Effects of Invention

In accordance with an aspect of the present invention, it is possible to generate, with a relatively small operation amount, a dynamic model in which a change of an analysis target phenomenon in a temporal direction and a spatial direction is accurately reflected.

Brief Description of Drawings

Fig. 1 is a view illustrating an example of a configuration of a main part of an information processing device in accordance with an embodiment of the present invention.
Fig. 2 is a view illustrating an example of a configuration of a control system including the information processing device.
Fig. 3 is a view illustrating an overview of an analysis method in accordance with an embodiment of the present invention.
Fig. 4 is a view illustrating an example in which a dynamic model is generated from time-series data extracted from a moving image obtained by imaging an inside of an incinerator and a prediction image is generated on the basis of the generated dynamic model.
Fig. 5 is a flowchart illustrating an example of a process executed by the information processing device.
Fig. 6 is a flowchart illustrating another example of a process executed by the information processing device.

Description of Embodiments

[System configuration]

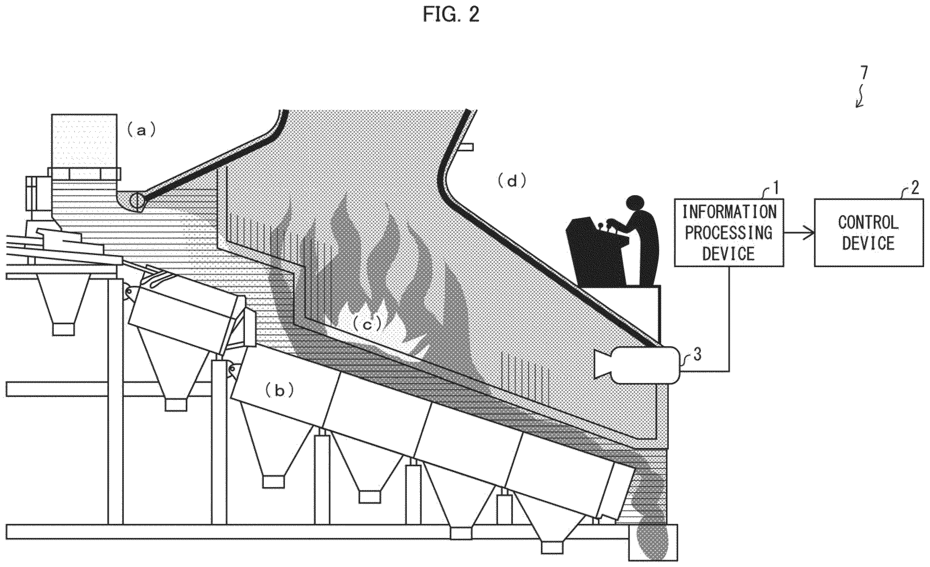

The following description will discuss, with reference to Fig. 2, a configuration of a control system 7 in accordance with an embodiment of the present invention. Fig. 2 is a view illustrating an example of a configuration of the control system 7. The control system 7 is a system for controlling various pieces of equipment provided in an incinerator in a waste incineration plant. This incinerator is configured such that a waste fed from a hopper (indicated by (a) in Fig. 2) is incinerated in a furnace (indicated by (c) in Fig. 2) while being transferred by a fire grate (indicated by (b) in Fig. 2). This incinerator is further configured such that an operator who is in a control room (indicated by (d) in Fig. 2) can control various pieces of equipment such as the fire grate. Note that the waste only needs to be the one that can be incinerated. For example, the waste may be a general waste such as a domestic waste or an industrial waste.
As shown in Fig. 2, the control system 7 includes an information processing device 1, a control device 2, and an imaging device 3. In the example shown in Fig. 2, among these elements, the information processing device 1 and the control device 2 are provided in the control room. Further, the imaging device 3 is provided at a position where the imaging device 3 can capture an image of an inside of the furnace (specifically, such a position can be a downstream position in a transfer direction of the waste). Note that the information processing device 1 and the control device 2 may be provided outside the control room.
The information processing device 1 generates reconfiguration data by reconfiguring time-series data from part of frequency components of the time-series data obtained as a result of observation of an analysis target phenomenon in a plant (details thereof will be described later). Then, the information processing device 1 carries out spatio-temporal analysis on the reconfiguration data thus generated, so as to generate a dynamic model indicative of a change of the phenomenon in a temporal direction and a spatial direction. The information processing device 1 carries out inference about the phenomenon with use of this dynamic model.
In the example described in the present embodiment, the analysis target phenomenon is combustion of a waste in an incinerator in a waste incineration plant. Further, in the example described in the present embodiment, the time-series data is time-series frame images which are extracted from a moving image which is captured by the imaging device 3 and which is indicative of a combustion state of the waste in the incinerator. Thus, the dynamic model is a model indicative of a change of the combustion state of the waste in the incinerator, the change being observed in a temporal direction and a spatial direction.
The control device 2 controls the equipment of the plant on the basis of a result of the inference carried out by the information processing device 1. The equipment which is to be controlled may be any equipment that gives influence on the combustion state of the waste in the incinerator. For example, the control device 2 may be the one that carries out (i) control for adjusting a speed of the fire grate by controlling equipment causing the fire grate to operate and/or (ii) control for adjusting, by controlling a combustion air feeder, an amount of combustion air to be fed. The speed of the fire grate can be rephrased as a transfer speed of the waste.

As discussed above, the control system 7 includes the information processing device 1 and the control device 2. The information processing device 1 generates reconfiguration data by reconfiguring time-series data from part of frequency components of the time-series data obtained as a result of observation of the analysis target phenomenon. The information processing device 1 carries out spatio-temporal analysis on the reconfiguration data thus generated, so as to generate a dynamic model. The information processing device 1 carries out inference about the phenomenon with use of the dynamic model thus generated. The control device 2 controls the equipment of the plant on the basis of a result of the inference carried out by the information processing device 1.

As compared to a configuration that carries out spatio-temporal analysis on analysis-target time-series data as it is, the above configuration can give, with a small operation amount, a high-accuracy inference result by a dynamic model in which a change of the part of the frequency components in a temporal direction and a spatial direction is accurately reflected (details thereof will be described later). Further, the above configuration can automatically carry out appropriate control on the basis of the result. For example, in a case where the information processing device 1 infers that the burn-off point will be shifted toward a downstream side beyond an appropriate range, the control device 2 may carry out control for reducing the speed of the fire grate. This makes it possible to remain the burn-off point within the appropriate range.

[Configuration of information processing device]

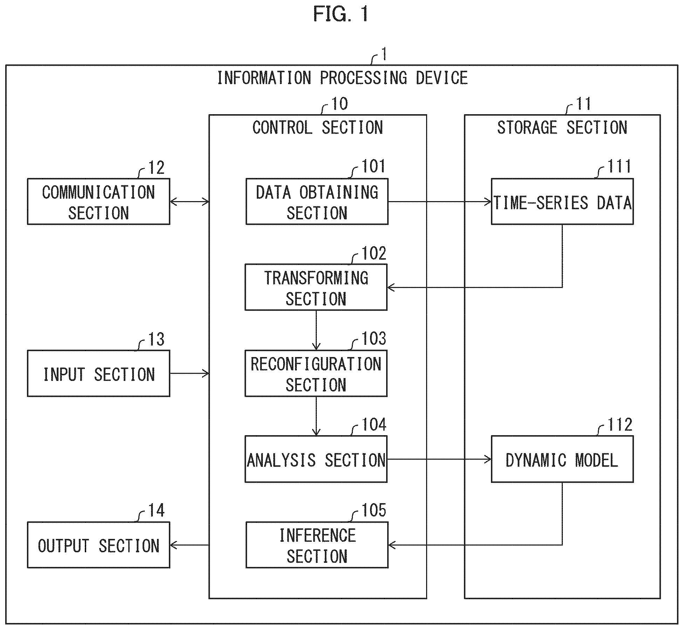

The following will describe a configuration of the information processing device 1 with reference to Fig. 1. Fig. 1 is a block diagram illustrating an example of a configuration of a main part of the information processing device 1. As shown in Fig. 1, the information processing device 1 includes a control section 10 which comprehensively controls sections of the information processing device 1 and a storage section 11 in which various data to be used by the information processing device 1 is stored. The information processing device 1 further includes a communication section 12 via which the information processing device 1 communicates with another device, an input section 13 which accepts input of various data for the information processing device 1, and an output section 14 via which the information processing device 1 outputs various data.

Further, the control section 10 includes a data obtaining section 101, a transforming section 102, a reconfiguration section 103, an analysis section 104, and an inference section 105. The storage section 11 has time-series data 111 and a dynamic model 112 stored therein.

The data obtaining section 101 obtains time-series data obtained as a result of observation of the analysis target phenomenon in the plant. The time-series data thus obtained is stored in the storage section 11 as the time-series data 111. Specifically, the data obtaining section 101 obtains a moving image which is captured by the imaging device 3 shown in Fig. 2 and which is indicative of a combustion state of the waste in the incinerator. The data obtaining section 101 obtains the time-series data 111 by extracting, from the moving image, frame images at a given sampling cycle. Note that the data obtaining section 101 may resize the frame images and deal with them as the time-series data 111.

The transforming section 102 transforms the time-series data 111 into frequency-domain data (which can also be called a "frequency component"). For example, the transforming section 102 may transform the time-series data 111 into the frequency-domain data by subjecting the time-series data 111 to discrete Fourier transform (DFT) or fast Fourier transform (FFT).

The reconfiguration section 103 generates reconfiguration data by reconfiguring time-series data 111 from part of frequency components of the time-series data 111. Specifically, in subjecting the frequency-domain data generated by the transforming section 102 to inverse transformation so as to turn the frequency-domain data into time-domain data again, the reconfiguration section 103 generates reconfiguration data by using only part of the frequency-domain data rather than by using all of the frequency-domain data. This process can be regarded as a process of removing an unnecessary frequency component or a process of extracting a necessary frequency component.

The analysis section 104 carries out spatio-temporal analysis on the reconfiguration data generated by the reconfiguration section 103, so as to generate a dynamic model indicative of a change of the analysis target phenomenon in a temporal direction and a spatial direction. The dynamic model thus generated is stored in the storage section 11 as the dynamic model 112. As discussed above, in the example described in the present embodiment, the dynamic model 112 is a model indicative of a change of the combustion state of the waste in the incinerator, the change being observed in a temporal direction and a spatial direction.

The inference section 105 carries out inference about the analysis target phenomenon in the plant with use of the dynamic model 112. In the example described in the present embodiment, the inference section 105 generates, with use of the dynamic model 112, a prediction image indicative of a future combustion state of the waste in the incinerator.

As discussed above, the information processing device 1 includes the reconfiguration section 103 and the analysis section 104. The reconfiguration section 103 generates the reconfiguration data by reconfiguring time-series data 111 from part of frequency components of the time-series data 111 obtained as a result of observation of the analysis target phenomenon in the plant. The analysis section 104 carries out spatio-temporal analysis on the reconfiguration data to generate the dynamic model 112 indicative of a change of the phenomenon in a temporal direction and a spatial direction.

The above configuration does not carry out spatio-temporal analysis on analysis-target time-series data as it is, but carries out spatio-temporal analysis on reconfiguration data which is obtained by reconfiguring time-series data from part of frequency components thereof. Thus, as compared to the configuration that carries out spatio-temporal analysis on the analysis-target time-series data as it is, the above configuration can generate, with a smaller operation amount, a dynamic model in which a change of the analysis target phenomenon in a temporal direction and a spatial direction is accurately reflected.

Further, the information processing device 1 includes the inference section 105 that carries out inference about the analysis target phenomenon with use of the dynamic model 112. Consequently, it is possible to obtain a high-accuracy inference result provided by the dynamic model 112 in which a change of the part of the frequency components in a temporal direction and a spatial direction is accurately reflected. Note that there is no particular limitation on the content of the inference. For example, the inference section 105 may generate a prediction image indicative of a future combustion state of the waste. Further, the inference section 105 may analyze the generated prediction image so as to classify the future combustion state of the waste.

[Overview of analysis method]

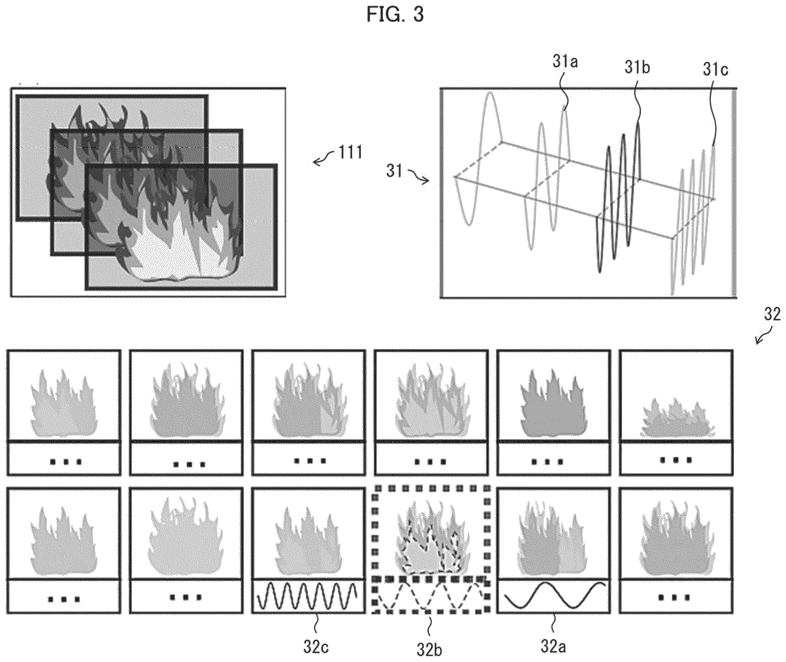

The following will describe an overview of an analysis method in accordance with the present embodiment with reference to Fig. 3. Fig. 3 is a view illustrating an overview of the analysis method in accordance with the present embodiment. The analysis method in accordance with the present embodiment carries out spatio-temporal analysis by dynamic mode decomposition (DMD). Fig. 3 illustrates the time-series data 111, a graph group 31 indicative of frequency components, and an image group 32 indicative of dynamic modes derived through DMD. The time-series data 111 is frame images extracted from a moving image obtained by imaging an inside of the incinerator. Further, the graph group 31 indicative of the frequency components can be obtained by transforming the time-series data 111 into a frequency domain.

Graphs 31a to 31c included in the graph group 31 indicate respective different frequency components. Of the frequency components indicated by the three graphs, a frequency component indicated by the graph 31a is located closer to a low frequency side than any other ones, and a frequency component indicated by the graph 31c is located closer to a high frequency side than any other ones. In the moving image obtained by imaging the inside of the incinerator, a change such as flickering flame appears as a high-frequency component and a change of the combustion position appears as a low-frequency component. In monitoring of the waste incineration plant, a frequency component located closer to a low frequency side, which frequency component indicates a change over a relatively long period, for example, 10 minutes or longer, is important.

Images included in the image group 32 indicate, as images of the inside of the incinerator, the dynamic modes derived through DMD. Fig. 3 shows graphs indicating waveforms of the dynamic modes such that the waveforms are associated with the respective images. In this manner, DMD analyzes the analysis target phenomenon by decomposing the time-series data 111 into a plurality of dynamic modes. This analysis method will be described below.

According to DMD, time-series changes of data are indicated by a linear operator A, as shown in Mathematical Expression (1) indicated below. That is, a state $x_{k+1}$ at a time point k+1 is represented by a product of (i) a state $x_k$ at a time point k, which is immediately before the time point k+1, and (ii) the linear operator A. For example, in a case where the time-series data 111 is frame images extracted from a moving image as in the case shown in Fig. 3, "$x_k$" shown below denotes a vector indicative of pixel values (e.g., RGB values) of the frame images, "K" shown below denotes the number of the frame images, and "P" shown below denotes resolutions of the respective frame images.

$$\mathbf{x}_{k+1} = \mathbf{A}\mathbf{x}_k, \text{ for } k = 1, \ldots, K - 1. \quad \cdots (1)$$

$$\mathbf{A} \in \mathbb{C}^{\mathcal{P} \times \mathcal{P}}$$

Then, as shown in Mathematical Expression (2) indicated below, DMD derives an operator A that minimizes an error between snapshot matrices "$X_1 = [x_1, \ldots, x_{k-1}]$" and "$X_2 = [x_2, \ldots, x_k]$", which are shifted from each other by one in time-series order. Note that a snapshot is a vector indicative of a state at a certain time. Further, "F" denotes the

Frobenius norm.

$$\|\mathbf{X}_2 - \mathbf{A}\mathbf{X}_1\|_F, \quad \cdots (2)$$

"A" indicated above can be calculated by the least-squares method, as shown in Mathematical Expression (3) indicated below. Note that, in Mathematical Expression (3), the symbol located at the upper right of $X_1$ represents a Moore-Penrose pseudo-inverse matrix.

$$\mathbf{A} = \mathbf{X}_2 \mathbf{X}_1^{\dagger} \quad \cdots (3)$$

DMD derives an eigenvalue and an eigenvector of A by carrying out eigendecomposition of the operator A (details thereof will be omitted). The eigenvector of A is the dynamic mode. As indicated by the image group 32 shown in Fig. 3, multiple dynamic modes are calculated from the time-series data 111.

Here, as discussed above, the graph group 31 shown in Fig. 3 indicates frequency components of the time-series data 111. Of the graphs included in the graph group 31, the graphs 31a to 31c indicate frequency components respectively corresponding to the dynamic modes of the images 32a to 32c included in the image group 32. Thus, there is a correspondence relation between (i) the frequency components obtained by subjecting the time-series data 111 to fast Fourier transform or discrete Fourier transform and (ii) the dynamic modes calculated by DMD.

As the number N of dynamic modes to be calculated increases, the operation amount of DMD increases. Thus, the analysis method in accordance with the present embodiment generates reconfiguration data by reconfiguring time-series data 111 from part of frequency components of the time-series data 111. For example, in order to work out, among the dynamic modes indicated by the image group 32, a dynamic mode indicated by the image 32b, reconfiguration data is generated with use of a frequency component corresponding to, among the graphs included in the graph group 31, the graph 31b corresponding to the image 32B. This makes it possible to calculate, among the dynamic modes indicated by the image group 32, only the dynamic mode indicated by the image 32b quickly and with a small operation amount.

Specifically, according to the analysis method in accordance with the present embodiment, the transforming section 102 first transforms the time-series data 111 into frequency-domain data. Here, in a case where a measurement target at each time step includes an element P, "$x_k$" in Mathematical Expression (1) is as indicated below.

$$\mathbf{x}_k \in \mathbb{C}^{\mathcal{P}}$$

On the basis of $x_k$ above, sampling is carried out with a sampling frequency $f_s$, so as to yield one-dimensional time-series data indicated below.

$$\mathbf{x} \in \mathbb{C}^K$$

Assuming that the sampling frequency is s = [0, 1, 2, ... , (K-1)]/$f_s$, the one-dimensional time-series data is transformed into frequency-domain data where J = K. Then, the following result is obtained.

$$\mathbf{y} \in \mathbb{C}^J$$

Further, each frequency component y j is represented by a weighted sum of all the elements included in x, that is, Mathematical Expression (4) below.

$$\mathbf{y} := \{y_k\}_{k=1}^K = \sum_{j=0}^{J-1} x_j \left[\cos(2\pi kj/J) - i\sin(2\pi kj/J)\right],$$

$$= \sum_{j=0}^{J-1} x_j e^{-i2\pi kj/J} \qquad \cdots (4)$$

The transforming section 102 may transform the time-series data 111 into frequency-domain data according to Mathematical Expression (4) indicated above, for example. This transform is similar to general discrete Fourier transform.

Subsequently, the reconfiguration section 103 carries out, according to, e.g., Mathematical Expression (5) indicated below, inverse transformation of the frequency-domain data obtained as a result of the above transformation, so as to turn the frequency-domain data into the image again. This provides reconfiguration data corresponding to part of the frequency components of the time-series data 111. The reconfiguration data is identical to the original time-series data 111 in the number of pixels and the size; however, the reconfiguration data does not include information about part of the frequency components. Thus, it can be said that the reconfiguration data is lower-rank approximate data of the original time-series data 111.

$$\hat{\mathbf{x}} := \{\hat{x}_k\}_{k=1}^K = \frac{1}{\sqrt{J}} \sum_{j=0}^{J-1} \zeta y_j e^{i2\pi kj/J} \qquad \cdots (5)$$

Mathematical Expression (5) indicated above is a general mathematical expression of inverse Fourier transform to which $\zeta$ is added. As indicated below, $\zeta$ denotes an indicator function for determining whether to incorporate certain $y_j$ into the reconfiguration data. Further, $\tau$ denotes information indicative of domain knowledge relating to a task. Specifically, $\tau$ denotes a frequency relating to a task, and $\tau = \{\tau_1, \tau_2, ... ,\tau_D\}$. The task in the present embodiment is generating a dynamic model indicative of a change of an analysis target phenomenon in a plant, the change being observed in a temporal direction and a spatial direction over a relatively long period (for example, 10 minutes or longer).

$$\zeta = \begin{cases} 1, & \text{if } s[j] < \tau \\ 0, & \text{otherwise,} \end{cases}$$

Only one piece of task-related frequency information $\tau$ may be set. Alternatively, a plurality of pieces of task-related frequency information $\tau$ may be set. For example, in the example shown in Fig. 3, when $\tau$ indicative of the frequency component indicated in the graph 31b is set, the dynamic mode corresponding to the image 32b is calculated. When $\tau$s (three $\tau$s in total) respectively corresponding to the frequency components indicated in the graphs 31a to 31c are set, the dynamic modes corresponding to the images 32a to 32c are calculated.

A value of the task-related frequency information $\tau$ may be determined in advance according to an analysis target phenomenon. For example, the value of $\tau$ may be set on the basis of an operation period of equipment which is operating in the plant. In the incinerator of the waste incineration plant, the fire grate is operating periodically. Thus, the operation period of the fire grate may be used as a reference. Then, a frequency component higher than the operation period may not be used, and a frequency component lower than the operation period may be used. The inventors of the present invention succeeded in precise estimation of a state of the inside of the incinerator in an experiment where $\tau = 300^{-1}$ Hz.

In the above-described manner, the reconfiguration section 103 may generate reconfiguration data from a frequency component(s) selected on the basis of an operation period of equipment that is operating in the plant. With this, it is possible to generate reconfiguration data from a suitable frequency component(s) selected in consideration of operation of the equipment in the plant.

Note that the process of determining the task-related frequency information $\tau$ on the basis of the operation period of the equipment that is operating in the plant may be carried out by a user of the information processing device 1 or by the information processing device 1. In the latter case, the information processing device 1 accepts input of the operation period of the equipment, and automatically sets a value of $\tau$ according to the operation period thus input. Further, in a case where the operation period of the equipment that is operating in the plant is changed, the reconfiguration section 103 may update $\tau$ to a value corresponding to the changed operation period.

The reconfiguration data generated by the above process is expressed as below.

$$\hat{\mathbf{X}} = \left[\hat{\mathbf{x}}_1, \ldots, \hat{\mathbf{x}}_k\right]$$

Then, the analysis section 104 calculates an eigenvalue and an eigenvector of the operator A through DMD using the above reconfiguration data. In this case, Mathematical Expression (3) indicated above can be rewritten into the one as indicated below.

$$\hat{\mathbf{A}} = \hat{\mathbf{X}}_2\,\hat{\mathbf{X}}_1^{\dagger} \quad \cdots (3)'$$

The dynamic model 112 generated by the analysis section 104 can be represented by Mathematical Expression (6) indicated below using an eigenvalue $\Lambda^t$ and an eigenvector (dynamic mode) $\Phi$ calculated through DMD. Note that b denotes an amplitude of the corresponding dynamic mode. Since the eigenvalue, eigenvector, and amplitude indicated in Mathematical Expression (6) are calculated with use of the task-related frequency information $\tau$, $\tau$ is added to each of the characters corresponding thereto.

$$\mathbf{x}_t = \Phi_{\tau}\Lambda_{\tau}^{t}\mathbf{b}_{\tau} \quad \cdots (6)$$

After the dynamic model 112 indicated by Mathematical Expression (6) indicated above is generated in the above-described manner, the inference section 105 can predict a state $x_t$ at an arbitrary time t by using the dynamic model 112.

As discussed above, learning in DMD is completed when the eigenvalue and the eigenvector of the operator A are calculated. Thus, as compared to a machine learning technology that requires a large amount of training data such as a neural network, the above configuration is advantageous in that the above configuration requires less time and effort for collection of data for training and labeling of data for training. Further, the above configuration is also advantageous in that the above configuration is applicable to modeling of a phenomenon for which it is difficult to collect a large amount of training data.

[Specific example of process]

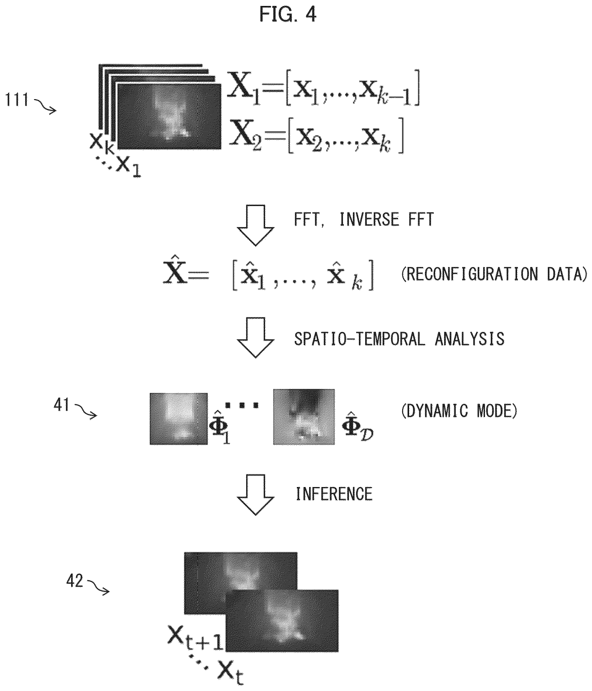

The following will describe, with reference to Fig. 4, an example where the above-described process is applied to the time-series data 111 extracted from the moving image obtained by imaging the inside of the incinerator. Fig. 4 is a view illustrating an example in which a dynamic model 112 is generated from the time-series data 111 extracted from the moving image obtained by imaging the inside of the incinerator and a prediction image is generated on the basis of the generated dynamic model 112.

In the example shown in Fig. 4, time-series data 111 constituted by k frame images $x_1$ to $x_k$ is used as input data. The transforming section 102 transforms each of $x_1$ to $x_k$ included in the time-series data 111 into frequency-domain data through Fourier transform (e.g., FFT). Then, the reconfiguration section 103 reconfigures, through inverse Fourier transform (e.g., inverse FFT), time-series data 111 from part of frequency components included in the frequency-domain data. The above frequency components are frequency components extracted on the basis of the task-related frequency information $\tau$. Fourier transform may be carried out according to Mathematical Expression (4) indicated above, and inverse Fourier transform may be carried out according to Mathematical Expression (5) indicated above.

Subsequently, the analysis section 104 carries out spatio-temporal analysis on the reconfiguration data through DMD, so as to derive a dynamic mode $\Phi$ and an eigenvalue $\Lambda$. Assuming that $\tau$ used for the calculation is $\tau = \{\tau_1, \tau_2,$

... , $\tau_D$}, resulting dynamic modes are D dynamic modes $\Phi = \{\Phi_1, \Phi_2, ... , \Phi_D\}$. Fig. 4 shows an image 41 including imaged dynamic modes.

As a result of calculating the eigenvalue A and the dynamic modes $\Phi$ in the above-described manner, the dynamic model 112 indicated by Mathematical Expression (6) is generated. In the example shown in Fig. 4, the inference section 105 uses the dynamic model 112 to generate a prediction image 42 indicating states of the inside of the incinerator at the time t and the time t+ 1.

The prediction image 42 indicates a state at a point of time later than those of the pieces of time-series data 111 $x_1$ to $x_k$ having been used to calculate the eigenvalue and the dynamic modes, that is, a future state of the incinerator. As long as the trend of the state change of the incinerator is maintained, prediction with use of the calculated eigenvalue and dynamic modes is effective. When a change occurs in the trend of the state change, an eigenvalue and dynamic modes may be calculated again with use of time-series data 111 obtained after occurrence of the change.

Note that use of the dynamic model 112 makes it possible to generate a prediction image at a point of time when the time-series data 111 is observed. Further, by comparing (i) a sequence generated with use of the prediction image, that is, the dynamic model 112 with (ii) a sequence of the time-series data 111 at the corresponding point of time, that is, the original sequence, it is possible to evaluate prediction precision. The inventors of the present application conducted an experiment and confirmed that the above configuration can generate a prediction image with adequate precision sufficient for practical use.

The prediction image is discrete data. However, by generating time-series prediction images, it is possible to predict, on the basis of these prediction images, a speed at which the state change takes place. Further, according to DMD, information (temporal dynamics) indicative of the periodicity of changes of each dynamic mode is calculated. It can be said that this periodicity indicates a speed of the changes.

[Flow of process]

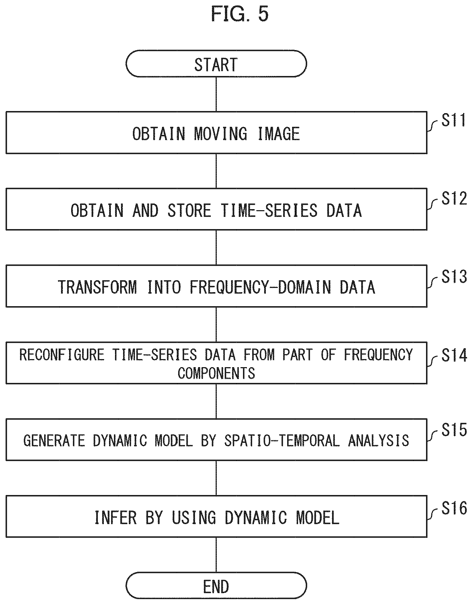

The following will describe, with reference to Fig. 5, a flow of the process (analysis method) executed by the information processing device 1. Fig. 5 is a flowchart illustrating an example of the process executed by the information processing device 1.

In S11, the data obtaining section 101 obtains a moving image indicative of a combustion state of a waste in an incinerator, the moving image being captured by the imaging device 3. Then, in S12, the data obtaining section 101 obtains time-series data by extracting frame images from the moving image obtained in S11, and stores it as time-series data 111 in the storage section 11.

In S13, the transforming section 102 transforms the time-series data 111 stored in S12 into frequency-domain data. This transform may be carried out with use of Mathematical Expression (4) indicated above, for example.

In S14 (reconfiguration step), the reconfiguration section 103 generates reconfiguration data by reconfiguring time-series data 111 from part of frequency components constituting the frequency-domain data obtained as a result of the conversion carried out in S13. This reconfiguration may be carried out with use of Mathematical Expression (5) indicated above, for example. This reconfiguration uses task-related frequency information $\tau$ indicative of the frequency component(s) to be used.

In S15 (analysis step), the analysis section 104 carries out spatio-temporal analysis on the reconfiguration data generated in S14, so as to generate a dynamic model 112. For example, the analysis section 104 may generate a dynamic model 112 expressed by Mathematical Expression (6) by calculating an eigenvalue and an eigenvector of the operator A in Mathematical Expression (3)' indicated above.

In S16, the inference section 105 carries out inference about the analysis target phenomenon in the plant with use of the dynamic model 112 generated in S15. For example, the inference section 105 may use the dynamic model 112 expressed by Mathematical Expression (6) to predict a state xt at an arbitrary time t. Then, the process shown in Fig. 5 is ended. Note that, after S16, the control device 2 may control the equipment in the plant on the basis of a result of the inference carried out in S16. A kind of equipment to be subjected to control and a kind of the control to be carried out in association with a certain inference result may be determined in advance.

As discussed above, the analysis method in accordance with the present embodiment includes the reconfiguration step (S14) and the analysis step (S15). The reconfiguration step (S14) generates reconfiguration data by reconfiguring time-series data 111 from part of frequency components of the time-series data 111 obtained as a result of observation of the analysis target phenomenon in the plant. The analysis step (S15) carries out spatio-temporal analysis on the reconfiguration data to generate the dynamic model 112 indicative of a change of the analysis target phenomenon in a temporal direction and a spatial direction. Consequently, it is possible to generate, with a relatively small operation amount, the dynamic model 112 in which the change of the analysis target phenomenon in a temporal direction and a spatial direction is accurately reflected.

[Flow of process (real-time process)]

Every time time-series data 111 is added, the reconfiguration section 103 may generate reconfiguration data from the time-series data 111 thus added. Then, the analysis section 104 updates the dynamic model 112 with use of the reconfiguration data thus generated. The inference section 105 may carry out inference about the analysis target phenomenon with use of the updated dynamic model 112. This makes it possible to output a result of the inference in real time or at an early timing which is almost real-time.

In this case, the analysis section 104 may generate and update the dynamic model 112 with use of a technique called streaming DMD, for example. The streaming DMD is a technique for updating the dynamic model 112 every time a new snapshot becomes available. Details of the process are described in, for example, "Dynamic Mode Decomposition for Large and Streaming Datasets" (Maziar S. Hemati et al.), Physics of Fluids, vol. 26, no. 11, p. 111701, 2014.

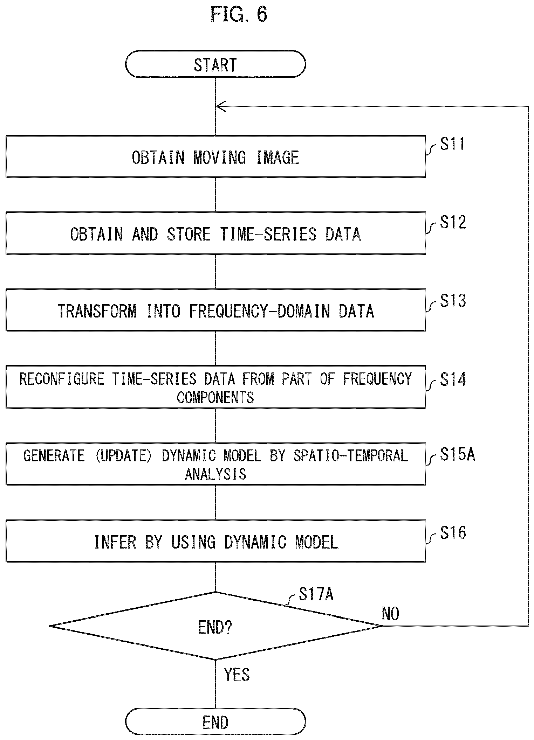

The following will describe, with reference to Fig. 6, a flow of the process (analysis method) executed by the information processing device 1 in order to carry out the above-described process. Fig. 6 is a flowchart illustrating another example of the process executed by the information processing device 1. Note that the same processes as those in Fig. 6 are given the same reference signs. Explanations of such processes are omitted.

In S15A, the analysis section 104 carries out spatio-temporal analysis on the reconfiguration data generated in S14, so as to generate a dynamic model 112. For example, the analysis section 104 generates the dynamic model 112 through the above-described streaming DMD. In a case where there exists an already-generated dynamic model 112, the analysis section 104 updates the already-generated dynamic model 112 with use of reconfiguration data generated in S14 carried out last time.

In S17A, the data obtaining section 101 determines whether to end the analyzing process. If it is determined that the analyzing process is to be ended at this point (YES in S17A), the analyzing process is ended. Meanwhile, if it is determined that the analyzing process is not to be ended (NO in S17A), the process returns to S11. Consequently, during capturing of a moving image, it is possible to output the latest inference result in real time or at an early timing which is almost real-time. Note that there is no particular limitation on the end condition in S17A. For example, the end condition may be ending of capturing of the moving image.

[Other applications]

The description of the above-described embodiment has mainly dealt with the example in which the dynamic model 112 indicative of the combustion state of the waste inside the incinerator of the waste incineration plant is generated. As another application example of the present invention, it is also possible to generate a dynamic model indicative of another phenomenon in the waste incineration plant. Alternatively, it is also possible to generate a dynamic model indicative of a phenomenon in a plant other than the waste incineration plant.

For example, in a plant for carrying out a sludge treatment, a process of adding a flocculant to sludge, stirring the resultant mixture, and separating a solid from the sludge is carried out. In this process, by analyzing an image of a stirred state of the sludge by the analysis method described in the above embodiment, it is possible to generate a dynamic model indicative of a change of the state of the sludge in a temporal direction and a spatial direction. Use of such a dynamic model makes it possible to predict a future state of the sludge and to appropriately control, on the basis of the prediction result, a timing to add the flocculant and an amount of the flocculant to be added. In this case, the task-related frequency information $\tau$ may be set at a value corresponding to an operation period of a stirring device that stirrers the sludge, for example.

[Variations]

Any entity can execute each of the processes described in the above-described embodiment, and is not limited to the one in the above examples. For example, of the processes shown in Fig. 5, the processes in S13 to S15 may be executed by another device (for example, a cloud server) separated from the information processing device 1. In this case, the information processing device 1 may transmit time-series data to said another device and obtain a dynamic model generated by said another device. As discussed above, the analysis method in accordance with the present embodiment may be executed by a single information processing device 1 or a plurality of information processing devices.

In the control system 7 shown in Fig. 2, the information processing device 1 and the control device 2 are separated from each other. Alternatively, a single device in which the information processing device 1 and the control device 2 are integrated together may provide a similar function to that of the control system 7.

The description of the above embodiment has dealt with DMD and streaming DMD as examples of the technique for spatio-temporal analysis. However, the technique for spatio-temporal analysis applicable to the present invention is not limited to these examples.

The description of the above embodiment has dealt with the example in which the frame images extracted from the moving image are used as the time-series data. However, the time-series data used in the present invention is not limited to this example, as long as the time-series data is the one obtained as a result of observation of the analysis target phenomenon in the plant. For example, the time-series data may be measurement values supplied from various sensors disposed in various places in the plant. In this case, generated is a dynamic model indicative of a change of an analysis target phenomenon in a temporal direction and a spatial direction, the change corresponding to the spatial positions of the various sensors and the measurement values of the various sensors.

[Software implementation example]

The functions of the information processing device 1 may be realized by an analysis program for causing a computer to function as the information processing device 1, the analysis program causing the computer to function as each of the control blocks (particularly, the sections included in the control section 10) of the information processing device 1.
In this case, the information processing device 1 includes, as hardware for executing the analysis program, a computer including at least one control device (e.g., a processor) and at least one storage device (e.g., a memory). The control device and the storage device execute the analysis program, so that the functions described in the above embodiment are implemented.
The analysis program may be stored in one or more non-transitory storage media each of which can be read by the computer. This storage medium may or may not be provided in the information processing device 1. In the latter case, the analysis program can be supplied to the device via any transmission medium such as a wired transmission medium or a wireless transmission medium.
A part of or all of the functions of the control blocks can be realized by a logical circuit. For example, an integrated circuit on which a logical circuit functioning as the control blocks is formed may also be encompassed in the present invention. Further, the functions of the control blocks can be realized by a quantum computer, for example.
The present invention is not limited to the embodiments, but can be altered by a skilled person in the art within the scope of the claims. The present invention also encompasses, in its technical scope, any embodiment derived by combining technical means disclosed in differing embodiments.

Reference Signs List

1: information processing device
103: reconfiguration section
104: analysis section
105: inference section
111: time-series data
112: dynamic model
2: control device
7: control system

**Claims**

**1.** An information processing device comprising:

a reconfiguration section that generates reconfiguration data by reconfiguring time-series data from part of frequency components of the time-series data obtained as a result of observation of a phenomenon in a plant which phenomenon is to be analyzed; and
an analysis section that carries out spatio-temporal analysis on the reconfiguration data to generate a dynamic model indicative of a change of the phenomenon in a temporal direction and a spatial direction.

**2.** The information processing device according to claim 1, further comprising:
an inference section that carries out inference about the phenomenon with use of the dynamic model.

**3.** The information processing device according to claim 2, wherein:

every time the time-series data is added, the reconfiguration section generates the reconfiguration data from the time-series data;

the analysis section updates the dynamic model with use of the reconfiguration data thus generated; and

the inference section carries out inference about the phenomenon with use of the dynamic model having been updated.

**4.** The information processing device according to any one of claims 1 to 3, wherein:

the reconfiguration section generates the reconfiguration data from a frequency component selected on a basis of an operation period of equipment that is operating in the plant.

**5.** An analysis method that is executed by one or more information processing devices, the analysis method comprising:

a reconfiguration step of generating reconfiguration data by reconfiguring time-series data from part of frequency components of the time-series data obtained as a result of observation of a phenomenon in a plant which phenomenon is to be analyzed; and

an analysis step of carrying out spatio-temporal analysis on the reconfiguration data to generate a dynamic model indicative of a change of the phenomenon in a temporal direction and a spatial direction.

**6.** A control system comprising:

an information processing device recited in claim 2; and

a control device that controls equipment in the plant on a basis of a result of the inference.

**7.** An analysis program for causing a computer to function as an information processing device recited in claim 1, the analysis program causing the computer to function as the reconfiguration section and the analysis section.

FIG. 1

FIG. 2

(a)

(d)

(c)

(b)

INFORMATION
PROCESSING
DEVICE 1

CONTROL
DEVICE 2

3

7

EP 4 459 403 A1

FIG. 3

EP 4 459 403 A1

## FIG. 4

$111$

$$X_1 = [x_1, ..., x_{k-1}]$$
$$X_2 = [x_2, ..., x_k]$$

⬇ FFT, INVERSE FFT

$$\hat{X} = [\hat{x}_1, ..., \hat{x}_k] \quad \text{(RECONFIGURATION DATA)}$$

⬇ SPATIO-TEMPORAL ANALYSIS

$41$    $\hat{\Phi}_1 \quad \cdots \quad \hat{\Phi}_{\mathcal{D}}$    (DYNAMIC MODE)

⬇ INFERENCE

$42$    $x_{t+1}$ $\cdots x_t$

## FIG. 5

```
                        ┌─────────────┐
                        │    START    │
                        └──────┬──────┘
                               │
        ┌──────────────────────┴──────────────────────┐
        │         OBTAIN  MOVING  IMAGE               │ ⌐S11
        └──────────────────────┬──────────────────────┘
                               │
        ┌──────────────────────┴──────────────────────┐
        │    OBTAIN AND STORE TIME-SERIES DATA         │ ⌐S12
        └──────────────────────┬──────────────────────┘
                               │
        ┌──────────────────────┴──────────────────────┐
        │   TRANSFORM INTO FREQUENCY-DOMAIN DATA       │ ⌐S13
        └──────────────────────┬──────────────────────┘
                               │
        ┌──────────────────────┴──────────────────────┐
        │ RECONFIGURE TIME-SERIES DATA FROM PART OF FREQUENCY │ ⌐S14
        │                  COMPONENTS                   │
        └──────────────────────┬──────────────────────┘
                               │
        ┌──────────────────────┴──────────────────────┐
        │ GENERATE DYNAMIC MODEL BY SPATIO-TEMPORAL ANALYSIS │ ⌐S15
        └──────────────────────┬──────────────────────┘
                               │
        ┌──────────────────────┴──────────────────────┐
        │       INFER BY USING DYNAMIC MODEL           │ ⌐S16
        └──────────────────────┬──────────────────────┘
                               │
                        ┌──────┴──────┐
                        │     END     │
                        └─────────────┘
```

# FIG. 6

```
        ┌─────────────────┐
        │      START      │
        └─────────────────┘
                 │
                 ▼ ◄──────────────────────────┐
 ┌───────────────────────────────────┐        │
 │      OBTAIN MOVING IMAGE          │ ⌐S11    │
 └───────────────────────────────────┘        │
                 │                             │
 ┌───────────────────────────────────┐        │
 │   OBTAIN AND STORE TIME-SERIES DATA │ ⌐S12   │
 └───────────────────────────────────┘        │
                 │                             │
 ┌───────────────────────────────────┐        │
 │   TRANSFORM INTO FREQUENCY-DOMAIN DATA │ ⌐S13 │
 └───────────────────────────────────┘        │
                 │                             │
 ┌───────────────────────────────────┐        │
 │ RECONFIGURE TIME-SERIES DATA FROM PART OF FREQUENCY │ ⌐S14 │
 │              COMPONENTS            │        │
 └───────────────────────────────────┘        │
                 │                             │
 ┌───────────────────────────────────┐        │
 │ GENERATE (UPDATE) DYNAMIC MODEL BY SPATIO-TEMPORAL │ ⌐S15A │
 │              ANALYSIS             │        │
 └───────────────────────────────────┘        │
                 │                             │
 ┌───────────────────────────────────┐        │
 │    INFER BY USING DYNAMIC MODEL   │ ⌐S16    │
 └───────────────────────────────────┘        │
                 │                             │
              ⌐S17A                            │
            ◇ END? ◇ ──── NO ──────────────────┘
                 │
                YES
                 │
        ┌─────────────────┐
        │       END       │
        └─────────────────┘
```

## INTERNATIONAL SEARCH REPORT

| | International application No. |
|---|---|
| | **PCT/JP2022/047561** |

**A. CLASSIFICATION OF SUBJECT MATTER**

*G05B 23/02*(2006.01)i
FI: G05B23/02 P; G05B23/02 R

According to International Patent Classification (IPC) or to both national classification and IPC

**B. FIELDS SEARCHED**

Minimum documentation searched (classification system followed by classification symbols)

G05B23/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-140573 A (NARA INSTITUTE OF SCHIENCE AND TECH) 03 September 2020 (2020-09-03) paragraphs [0011]-[0078], fig. 1-5 | 1-7 |
| A | JP 2016-521895 A (LARIMORE, Wallace E.) 25 July 2016 (2016-07-25) entire text, all drawings | 1-7 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **31 January 2023** | **14 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/047561**

| Patent document cited in search report | | | Publication date (day/month/year) | Patent family member(s) | | | Publication date (day/month/year) |
|---|---|---|---|---|---|---|---|
| JP | 2020-140573 | A | 03 September 2020 | (Family: none) | | | |
| JP | 2016-521895 | A | 25 July 2016 | US | 2014/0372091 | A1 | |
| | | | | entire text, all drawings | | | |
| | | | | WO | 2014/201455 | A1 | |
| | | | | EP | 3008528 | A1 | |
| | | | | CA | 2913322 | A1 | |
| | | | | KR | 10-2016-0021209 | A | |
| | | | | CN | 105814499 | A | |

Form PCT/ISA/210 (patent family annex) (January 2015)

20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018155411 A

**Non-patent literature cited in the description**

- **MAZIAR S. HEMATI et al.** Dynamic Mode Decomposition for Large and Streaming Datasets. *Physics of Fluids,* 2014, vol. 26 (11), 111701